# EUROPEAN PATENT APPLICATION

(11) **EP 1 502 803 A1**
(43) Date of publication of application: **02.02.2005**
(21) Application number: 03016662.3
(22) Date of filing: 31.07.2003
(51) Int. Cl.: B60K 37/02, G06F 9/44, B60R 16/02

(54) **Device and method for programming a controller for a car component**

(71) Applicant: Harman/Becker Automotive Systems GmbH, 76307 Karlsbad (DE)
(72) Inventor: Hovestadt, Guido, 58739 Wickede-Ruhr (DE); Koeppen, Jan, 76307 Karlsbad (DE)
(74) Representative: Beetz & Partner Patentanwälte

(57) **Abstract**

A car electronics apparatus (10) comprises input means (3, 5, 11 - 15, 30) for inputting car data to the apparatus, processing means (1) for processing, according to preset programs (16), signals and data, amongst them signals and data from the input means, output means (3, 5, 11 - 15) for outputting data, amongst them data from the processing means, and a programming interface (1, 2, 3, 18) allowing a user to create and/or modify and put into use a program (16, 17) for processing signals and data, amongst them data from the input means. A method of controlling a car component comprises the step of writing and/or putting into use a program, script or routine adapted for controlling said car component through a programming interface in said car, particularly through a programming interface in an apparatus as described above.

## Description

### Background of the invention

The invention relates to a car electronics apparatus and to a method of controlling a car component according to the preamble of the independent claims. Particularly, it relates to a car information processing apparatus capable of digital signal processing.

Car electronic apparatuses and particularly car information processing apparatuses are extensively used these days. Typical applications are vehicle control (engine control, transmission control, brake control, ...), access and accessories control (keyless entry, air condition, windows, mirrors, seats, maintenance cycles, ...), car navigational systems and the like. All these apparatuses have input means for acquiring in the one or other form data and signals, processing means for processing data and signals, and output means for outputting data in the one or other way.

A disadvantage of the presently known systems is that they lack flexibility as regards adaptation to the user. This lack of flexibility is in parts desired, at least as far as safety relevant tasks and components are concerned. For these tasks and components the ability of a user/owner of a car to modify them is restricted and should remain restricted in order to avoid user interventions detrimental to car and driving safety. This goal is accomplished by providing hardware and software components in a secure data environment protected against unauthorized access and modification. In parts, this secure data environment is provided by not giving external access to data processing components (i. e., no data output from the secure data environment, no data input into the secure data environment, no software input to the secure data environment). Besides of that, adding hardware components is in parts restricted to or by OEMs (Original Equipment Manufacturers), in order to maintain said secure data environment.

However, there are many aspects in car and car components control which do - by their nature - not require enhanced protection against unauthorized access. Examples may be car navigational applications, fleet management applications, control of components relating to driving comfort, and the like. However, these days more or less all applications, tasks and components in a car are not accessible for a user/driver/owner, and thus also components not subject to safety considerations as mentioned above are not accessible to a user and thus lack flexibility from a user's point of view.

### Brief description of the invention

It is the object of the invention to provide a car electronics apparatus allowing a flexible adaptation of functions within a car to the needs of a user, owner or driver.

This object is accomplished in accordance with the features of the independent claim. Dependent claims are directed on preferred embodiments of the invention.

A car electronics apparatus comprises input means for inputting data, car data, signals and/or car signals to the apparatus, processing means for processing signals and data according to preset programs, and output means for outputting data. The apparatus further comprises a programming interface allowing a user to create and/or modify a program for processing signals and/or data.

The car electronics apparatus may be or comprise a digital data processing apparatus, possibly with A/D-converters at the input side and/or D/A-converters at the output side.

The apparatus may obtain data and/or signals from a secure data environment within the car. It may also be adapted to allow modification or replacement of programs within said secure data environment. Programs within said environment may be marked as being protected against modification or replacement from said programming interface, or to be open for said modifications or replacements.

The car electronics apparatus may be built as a unit with another electronic component, particularly formed as an unit with a car navigational system. The car electronics apparatus described so far may share hardware components with said other component. For example, the above described car electronics apparatus may share data processing hardware with a car navigational system.

The apparatus may comprise an exchangeable storage medium adapted for carrying user data relevant for said programming interface. This may allow to transport programs and settings made through one programming interface in one car to another programming interface in another car.

A car electronics system may comprise a car electronics apparatus as mentioned above, and it may comprise a stationary programming interface not provided within a car, but at another location, for example a stationary site. With said stationary programming interface, programs and modifications may be made, tested and installed, and then they may be transmitted to the car electronics apparatuses provided within one or more cars to be installed there.

The programming interface may operate with a flexible input like a keyboard (thus allowing a user a very flexible input of commands and settings), or it may be a menu based system which offers to a user various inputs and parameters thereof for selection.

Both data input and/or output may be remote, then preferably wireless, or local, the latter being wireless or through cables.

### Brief description of the drawings

Features and embodiments of the invention will be described hereinafter more in detail with reference to the accompanying figures in which
- Fig. 1: shows an apparatus according to an embodiment, and
- Fig. 2: shows an apparatus according to another embodiment.

### Description of the preferred embodiments

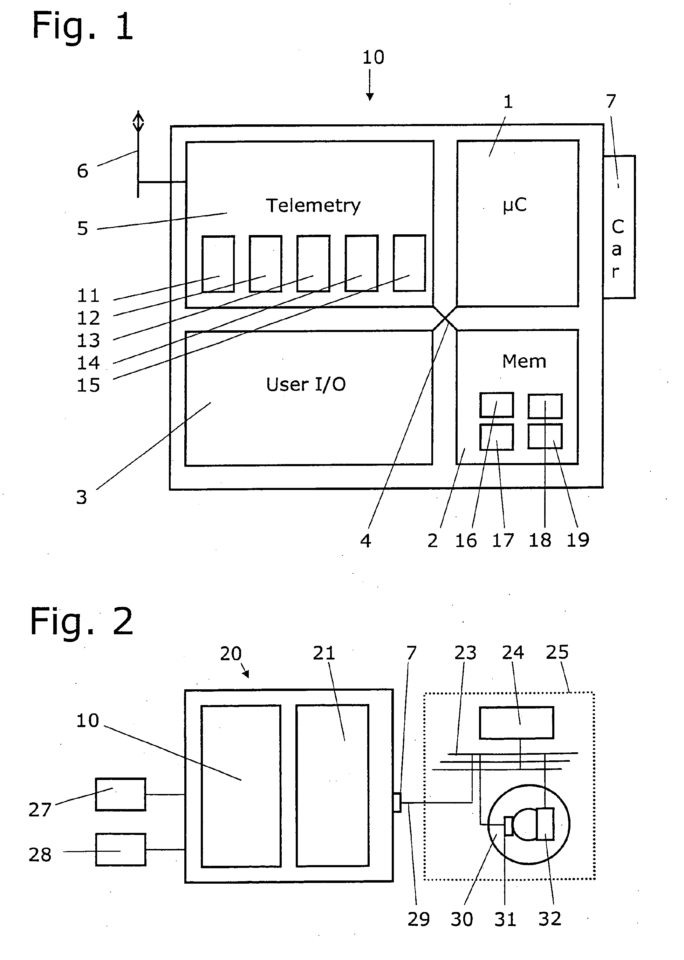

Fig. 1 shows a car electronics apparatus 10. It comprises a microcomputer 1, a memory unit 2, a user input/output section 3, a wireless input/output section 5, one or more antennas 6 (only one antenna shown) for the wireless input/output section, interconnections 4 of said components, and connections/terminals/interfaces 7 to other car components.

The microcomputer 1 may comprise a CPU and other components required for a proper processing. The memory section 2 may comprise a section 16 with predefined programs, a section 17 with user written programs, a library section 18 with selectable entries, an exchangeable storage section 19 which may be removed from the apparatus and possible inserted into a corresponding apparatus in another car. The memory section 2 may be a non-volatile memory, but may find - in use of the apparatus - corresponding data regions in a volatile memory, e. g. , a RAM. The user input/output section 3 may comprise components such as a keyboard, a screen, voice input/output, a pointer such a mouse or a touch pad, and the like.

The wireless input/output section may comprise one or more of the following components: a GMS-interface 11, a GPS receiver 12, a radio unit for receiving radio programs (which may also include a TV receiver) 13, a blue tooth interface 14, a wLAN interface 15, a cell phone interface, and the like. The antenna 6 is shown schematically. It may comprise more than one antenna connected to the respectively provided interfaces and hardware components. The connections to the car 7 may comprise an interface to a car data bus, for example, a CAN terminal/interface, or particular inputs for particular data, e. g., an input for particular sensor signals, e. g., pulses from a wheel sensor in order to get a measure for the car speed. The connections 7 to the car may comprise wireless connections such as the earlier mentioned blue tooth interface or the wLAN interface.

The input means may comprise a sensor 31 or an interface thereof, a receiver 11-15 for electromagnetic waves or an interface thereof, a data net interface 7, manual input means 3, a digital circuitry, particularly a storage 2 and/or a data bus 4. The output means of the apparatus may comprise one or more of an actuator 32 or an interface thereof, a sender 11-15 for radio waves or an interface thereof, a data net interface 7, a display 3, speech output, digital circuitry, particularly a storage 2 and/or a data bus 4.

The programming interface runs on the above-mentioned hardware structure and allows a user to write and/or modify programs to a larger or smaller extent. Said programs may refer to data and signals obtained from the input means of the apparatus. These data and/or signals - and also other data and signals - are processed by processing means 1 and are output in the one or other form.

With such a programming interface the user is able to flexibly write, create or modify applications suiting his needs. A fleet management system, for example, may be a program written by a user or a fleet administrator in which every 15 minutes the position of a car is obtained through the GPS interface and is sent through a wireless channel to a fleet management system, e. g., through a cell phone channel and/or in SMS-format. Likewise, wireless email transmittal is possible. However, should a fleet manager desire another informational structure, he, for example, might write through the programming interface a program which does not transmit position reports periodically, but which does so in a locus-dependent manner, e. g., always when the car reaches particular, predefined waypoints or is within a certain distance therefrom. The waypoint may also be the destination of the car.

The electronic apparatus may take data from a secure data environment. A secure data environment in this sense may be a data environment which is protected simply by not having any other accesses for a user than the one through the above described car electronics apparatus or through said programming interface. Said secure environment may, however, also be provided by protection mechanisms such as data coding or the like. A secure data environment may also be a data environment protected by legal requirements, particularly in a sense that their operation requires a permission for its use, and the permission expiring, if inadmissible modifications are made. Thus, the programming interface allows at least access to data in said environment (data read from said environment), in order to allow a user adapted use of these data which would, otherwise, not be accessible.

All or part of the input means, the processing means and the output means of the car electronics apparatus may also belong to said secure data environment and may operate in parts for said secure data environments, in parts for executing the programs generated or modified through said programming interface, and in parts to constitute said programming interface.

The programming interface may be implemented by software and run on hardware also used for other purposes, e. g. , as said above, for executing secure tasks, or on hardware of other car components. Particularly, the car electronics apparatus having the programming interface as mentioned above may be formed as an unit with a car navigational system. This is shown schematically with box 20 in Fig. 2. Box 20 is said unit of said car electronics apparatus 10 with a car navigational system 21. The car electronics apparatus 10 may share hardware components with the navigational system 21, particularly the data processing hardware.

Reference numeral 25 in Fig. 2 symbolizes the above-mentioned secure data environment, 27 and 28 are car components outside said secure data environment, e. g., car air condition, person detection and the like.

In said secure data environment 25 is schematically shown a control unit 24 connected to a bus 23. 30 is a wheel, 31 a wheel sensor, and 33 a wheel brake. In this example, it is assumed that, for example, brake control is entirely located within said secure data environment 25. But at least line 29 allows data read through terminal 7 from said environment 25.

In said secure data environment 25, at least some of the preset programs therein may be open for modification, and/or all or some of them are protected against modification through programming interface. For example, it is obviously potentially dangerous to allow user access to brake control. However, user access to preset car air condition would be uncritical. Thus, brake control routines would be protected against modification, whereas air condition control might be open for modification through said programming interface.

The apparatus may comprise a reset feature for resetting programs modified through said programming interface to their original state.

The car electronics apparatus may allow exchange of programs generated or modified through said programming interface with other components, particularly in other cars or with stationary equipment, particularly through wireless channels. Exchange may include both sending and receiving such programs. Thus, a program may be written somewhere and may then be distributed through said exchange means 5, 6, 7 to the respective cars having the car electronics apparatus as described above for their use. In these cars, said programs may be again be modified through said programming interface, e. g., for particular adaptations.

The car electronics apparatus as described above may comprise an exchangeable storage medium 19 adapted for carrying user data relevant for said programming interface. Said data may be programs generated or modified through said programming interface and/or data needed by or generated by programs generated or modified by said programming interface. Thus, a user could transport such data from a first car having a car electronics apparatus as mentioned above to a second car with the same apparatus and could, thus, transport his individual settings from one car to another car. Said exchangeable storage medium may be formed as a unit with a car key.

Programming through said programming interface may be accomplished in one or more of the following manners:
- Selecting and composing predefined commands and parameters thereof,
- selecting and composing predefined program parts and setting parameters therein,
- writing programs in a programming language,
- providing a programming environment and generating programs through said programming environment.

Predefined commands or program parts may be memorized in a library 18 stored in the memory section 2 of the apparatus 10. Said library may comprise one or more of scripts, commands, routines, programs and program parts.

The car electronics apparatus may be configured such that it allows remote access, particularly wireless access, for loading and retrieving data, particularly software. This configuration may be an inherent feature of the apparatus, or it may be provided by a program written with said programming interface. The remote access may be useful both for obtaining data, particularly data generated by programs from the programming interface, from the car without prompting such a transfer by components in the car. It may also be useful for loading software to the car, particularly software that may be worked by said programming interface.

The car electronics apparatus, and particularly the programming interface, may be thought of as consisting of a programming part for writing and/or editing and/or composing programs, scripts or the like, and of an executing part for executing said programs or scripts. The executing part may also be adapted to execute other programs not written by said programming interface, e.g. programs downloaded from a server through a wireless channel, also by server-push (i. e. initialized by a remote server, not initialized by the user of the programming interface), and/or by client-pull (i. e. initialized by the user of the programming interface).

The car electronics apparatus may receive from input means data required by programs, scripts or routines running on said programming interface, and/or may receive programs, scripts or routines themselves running on said programming interface and/or may receive program calls for programs, scripts or routines running on said programming interface. Said calls may have the effect to start said programs, scripts or routines on said programming interface.

The input means may be a receiver for wireless data transmittal, e.g. as used in taxi cabs. Likewise, the car electronics apparatus may be formed as a unit with a receiver for wireless data transmittal, e.g. as used in taxi cabs. It may be provided with an interface to a car navigational system for data exchange.

The above described wireless or remote access channel may refer to the GMS standard. It may use a cell phone channel, an SMS channel, a WAP channel or the like.

As far as the car electronics apparatus described so far communicates with other car components through the schematically shown terminal 7, this may be a terminal for a standardized channel such as a CAN terminal or a LAN terminal. It may also be some kind of data bus or a wireless channel such as blue tooth or wLAN.

Besides that, individual connections to individual components may be provided, such as the already above mentioned input for signals from a wheel sensor. Besides that, the apparatus may have a terminal for connection to another computer.

Besides the above components, the car electronics apparatus may comprise a WWW interface and/or browsing capabilities.

The apparatus may further comprise a user administration which allows to adjust, release or block the apparatus in accordance with person identification, possibly together with a password.

The programming interface may allow use and/ or programming of one or more of the following functions:
- Input/output functions to and from one or more of the above described components within the apparatus, within the car or remote thereto,
- memorizing functions for memorizing generated data and/or for retrieving data from the memory,
- computational functions in a broad sense,
- conditional jumps in order to allow program branches,
- formatting functions allowing to translate data in one format to data in another format,
- calling of (sub-) routines and (sub-) programs, possibly stored in the memory section of the device or elsewhere,
- data grasping functions for collecting data from the car, also from the initially mentioned secure data environment,
- data setting and assembling functions,
- control of car components through outputs generated by programs established through said programming interface,
- access to wireless communication channels, e. g., for transmitting car data to remote locations,
- control of functions, communication channels and car devices in dependence of time or predefined events or particular users or a locus,
- user administration,
- program and version administration,
- operation, administration and settings of interfaces,
- call for default settings,
- selection of librarized components,
- defining variables, allocating car parameters to them and formatting and processing said variables,
- text processing functions,
- file administration functions,
- interface adaptation functions.

Further, the car electronics apparatus may have data interfacing functions on the input side and/or on the output side. For the input side, this means that data desired to be available for programs written by the programming interface are preprocessed by the car electronics apparatus in that they are allocated to predefined variable names and converted to a known or desired format. For example, those data circulating on a car data net and desired to be available for programs from the programming interface may be picked up by the car electronics apparatus, formatted and allocated to predefined variables so that a program written through the programming interface may access them. On the output side, this means that data generated by programs written through the programming interface would be converted into formats and protocols of the desired destinations. Thus, a program written through the programming interface may, for example, desire to send data through an SMS channel to a particular receiver. The program itself would output perhaps only the desired number of the receiver and the data package to be sent. The data interface at the output side would convert these data into those required for operating the SMS hardware (format, protocol), which is in this example the destination of the program output.

The outputs generated by the programs written through the programming interface may be used for controlling car components, for example air condition, radio, car navigation, and the like.

A method of controlling a car component may comprise the step of writing and/or putting into use through a programming interface as described above a program, script or routine adapted for controlling said car component. Said method may comprise those steps performed by the hardware described above.

## Claims

1. A car electronics apparatus (10), comprising
input means (3, 5, 11 - 15, 30) for inputting car data to the apparatus,
processing means (1) for processing, according to preset programs (16), signals and data, amongst them signals and data from the input means,
output means (3, 5, 11 - 15) for outputting data, amongst them data from the processing means,
**characterized in** further comprising
a programming interface (1, 2, 3, 18) allowing a user to create and/or modify and put into use a program (16, 17) for processing signals and data, amongst them data from the input means.

2. An apparatus according to claim 1, wherein all or part of the input means, the processing means and the output means belong to a secure data environment (25), and the programming interface is adapted to allow a user to create and/or modify and put into use a program for processing signals and/or data from said secure data environment.

3. An apparatus according to claim 1 or 2, comprising a terminal (7) for connection to a secure data environment, the programming interface being adapted to allow a user to create and/or modify and put into use a program for processing signals and/or data from said secure data environment.

4. An apparatus according to one or more of the preceding claims, wherein all or some of the preset programs (16) are open for modification through the programming interface, and/or all or some of the preset programs are blocked against modification through the programming interface.

5. An apparatus according to claim 2, 3 or 4, comprising means for resetting said preset programs.

6. An apparatus according to one or more of the preceding claims, comprising exchange means (5-7) for sending and/or receiving programs created or modified through said programming interface.

7. An apparatus according to one or more of the preceding claims, comprising an exchangeable storage medium (19) adapted for carrying user data relevant for said programming interface.

8. An apparatus according to claim 7, wherein the exchangeable storage medium (19) is a unit with a car key.

9. An apparatus according to one or more of the preceding claims, comprising a library (18) with a plurality of executable entries which are selectable and composable through said programming interface.

10. An apparatus according to claim 9, in which the programming interface is adapted to modify entries in or selected from said library (18).

11. An apparatus according to claim 9 or 10, in which the entries in said library comprise one or more of scripts, commands, routines, programs.

12. An apparatus according to one or more of the preceding claims, comprising a remote access channel (5, 6) allowing wireless access for loading and retrieving data, particularly software.

13. An apparatus according to one or more of the preceding claims, which is formed as a unit (20) with a car navigational system (21), said unit having a terminal (7) for accessing a car data net (23).

14. An apparatus according to claim 13, wherein said terminal comprises a CAN terminal and/or a Bluetooth terminal and/or a wLAN terminal.

15. An apparatus according to one or more of the claims 12 to 14, wherein said unit has a terminal for an input from one or more wheel sensors of the car.

16. An apparatus according to one or more of the preceding claims, having a terminal for connection to another computer.

17. Car electronics apparatus according to one or more of the preceding claims, **characterized in that** the input means comprises one or more of
- a sensor (31) or an interface thereof,
- a radio wave receiver (11 - 15) or an interface thereof,
- a data net interface (7, 22),
- manual input means (3),
- digital circuitry, particularly a storage (2) and/or a data bus (4).

18. Car electronics apparatus according to one or more of the preceeding claims, **characterized in that** the output means comprises one or more of
- an actuator (32) or an interface thereof,
- a radio wave sender ( 11 - 15) or an interface thereof,
- a data net interface (7, 22),
- a display (3) or an interface thereof,
- digital circuitry, particularly a storage (2) and/or a data bus (4).

19. Car electronics apparatus according to one or more of the preceeding claims, **characterized in that** it is or comprises a car navigational apparatus (21).

20. Car electronics apparatus according to one or more of the claims 17 - 19, **characterized in that** it comprises one or more of
- a GMS interface (11),
- a CAN interface (7),
- a WWW interface,
- a cell phone interface,
- a GPS interface (12),
- a Bluetooth interface (14),
- a wLAN interface (15),
- a radio and/or TV interface (13).

21. An apparatus according to one or more of the preceding claims, comprising release means for releasing the use of the programming interface in accordance with preset and/or user-defined conditions.

22. An apparatus according to one or more of the preceding claims, wherein the programming interface allows use and/or programming of one or more of the following functions:
- input/ output functions,
- memorizing functions,
- computational functions,
- conditional jumps,
- formatting functions,
- calling of (sub-)routines and (sub-)programs,
- data grasping functions,
- data setting and assembling functions,
- control of car components,
- access to wireless communication channels,
- time- or event- or user- or locus-dependent control of functions, communication channels and devices,
- user administration,
- program and version administration,
- operation, administration and settings of interfaces,
- call for default settings,
- selection of librarized components.

23. An apparatus (10) according to one or more of the preceding claims, wherein the output means (3, 5, 11 - 15) are adapted for outputting data for controlling car components (27, 28).

24. An apparatus according to one or more of the preceding claims, which is adapted to execute programs not written by said programming interface, particularly programs downloaded from a remote location.

25. An apparatus according to one or more of the preceding claims, which is adapted to receive from input means data required by programs, scripts or routines running on said programming interface, and/or programs, scripts or routines themselves running on said programming interface and/or program calls for programs, scripts or routines running on said programming interface.

26. An apparatus according to one or more of the preceding claims, wherein the input means comprises a receiver for wireless data transmittal.

27. An apparatus according to one or more of the preceding claims, which is formed as a unit with a receiver for wireless data transmittal.

28. An apparatus according to claim 26 or 27, comprising an interface to a car navigation apparatus.

29. A method of controlling a car component, comprising the step of writing and/or putting into use a program, script or routine adapted for controlling said car component through a programming interface in said car, particularly through a programming interface in an apparatus according to one or more of the preceding claims.
